# FASCICULE DE BREVET EUROPEEN

(11) **EP 0 407 310 B1**
(45) Date de publication et mention de la délivrance du brevet: **01.12.1993**
(21) Numéro de dépôt: 90420297.5
(22) Date de dépôt: 25.06.1990
(51) Int. Cl.: H02H 3/347

(54) **Déclencheur statique comportant un système de désensibilisation de la protection terre**
Festkörperauslöser mit einer Desensibilisierungsvorrichtung für den Erdschutz
Static trip unit with a desensibilisation system for earth protection

(30) Priorité: 03.07.1989 FR 8909017
(43) Date de publication de la demande: 09.01.1991
(73) Titulaire: MERLIN GERIN, F-38240 Meylan (FR)
(72) Inventeur: Tripodi, Paul, F-38050 Grenoble Cedex (FR); Del Vecchio, Alain, F-38050 Grenoble Cedex (FR)
(74) Mandataire: Jouvray, Marie-Andrée

(56) Documents cités:
- EP-A- 0 283 358
- DE-A- 2 123 514
- FR-A- 1 342 687

## Description

L'invention concerne un déclencheur statique d'un disjoncteur de protection d'un réseau électrique à courant alternatif constitué par au moins deux conducteurs, déclencheur comportant des moyens de détection des courants de phase parcourant les conducteurs du réseau, des moyens de détection du courant homopolaire circulant dans le réseau, un ensemble électronique de traitement auquel sont appliqués les signaux de sortie des moyens de détection et assurant une fonction de protection contre les défauts à la terre en engendrant, avec ou sans retard, un ordre de déclenchement du disjoncteur en cas de dépassement d'un seuil de déclenchement différentiel prédéterminé par le courant homopolaire.

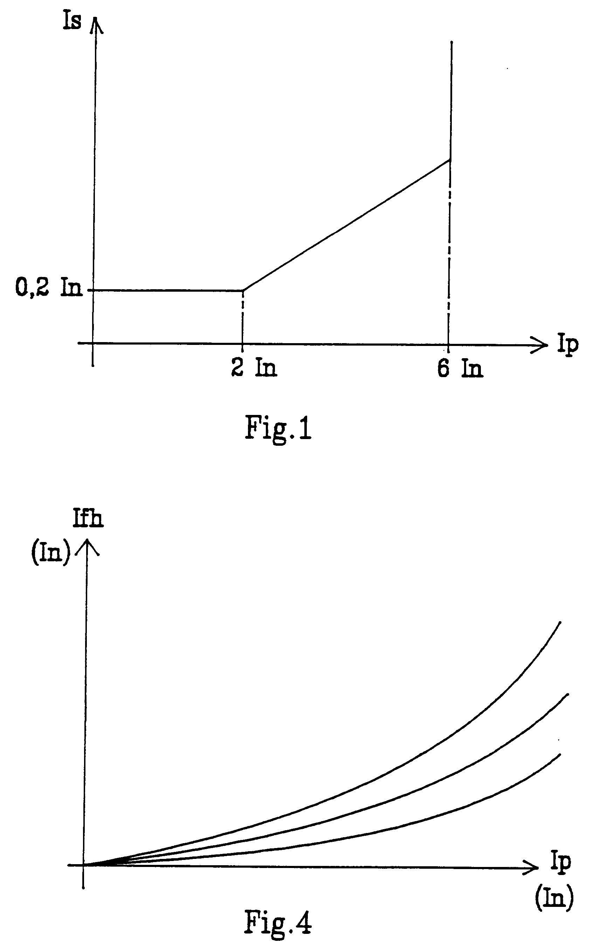

Or, lorsque les courants de phase dans le réseau sont supérieurs à un certain seuil, la somme vectorielle des courants présents aux secondaires des transformateurs de courant n'est pas nulle même en l'absence de défaut à la terre. Un signal, dit faux courant homopolaire, est alors détecté par les moyens de détection du courant homopolaire auquel il se superpose. Afin d'éviter des déclenchements intempestifs du disjoncteur, dûs non pas à un défaut à la terre mais à l'existence de ce faux courant homopolaire, certains disjoncteurs connus (voir par exemple DE-A-2123514), assurant une fonction de protection contre les défauts à la terre, comportent un système de désensibilisation de la protection terre. In étant le courant nominal du disjoncteur, les systèmes de désensibilisation connus permettent de relever le seuil de déclenchement terre lorsque l'un des courants de phase dépasse une première valeur prédéterminée. Comme représenté sur la figure 1 le seuil de déclenchement terre Is est constant, par exemple égal à 0,2 In, lorsque le courant de phase Ip est inférieur à 2 In, puis ce seuil Is croît linéairement avec le courant de phase lorsque celui-ci est supérieur à 2 In. Pour de très fortes valeurs du courant de phase cette désensibilisation n'est généralement pas suffisante, le faux courant homopolaire augmentant alors très rapidement, et il a été proposé de bloquer la protection terre lorsque le courant de phase atteint une deuxième valeur prédéterminée, par exemple 6 In comme représenté sur la figure 1. Bien entendu les valeurs mentionnées ci-dessus ne sont données qu'à titre d'exemple.

L'invention a pour but un déclencheur assurant la fonction de protection terre insensible aux faux courants homopolaires.

Selon l'invention ce but est atteint par le fait que le seuil de déclenchement différentiel Is est une fonction polynomiale, d'ordre supérieur ou égal à deux, du courant de phase le plus élevé Ip circulant dans le réseau, soit une fonction du type Is = a + bIp + cIp² + dIp³ +......, dans laquelle les coefficients a,b,c,d sont des constantes.

Selon un mode de réalisation préférentiel la fonction est du type Is = a + cIp² + dIp³.

Les coefficients sont déterminés dans chaque cas en fonction du type de disjoncteur de manière à ce que, pour tout courant de phase Ip prédéterminé, le seuil de déclenchement différentiel Is soit toujours supérieur au faux courant homopolaire Ifh susceptible d'être détecté par le déclencheur.

La fonction polynomiale peut n'être utilisée qu'au dessus d'une certaine valeur du courant de phase, un seuil fixe prédéterminé, réglable par un opérateur, pouvant être utilisé comme dans les déclencheurs connus tant que le courant de phase est inférieur à cette valeur.

D'autres avantages et caractéristiques ressortiront plus clairement de la description qui va suivre d'un mode de mise en oeuvre de l'invention, donné à titre d'exemple non limitatif, et illustré par les dessins annexés dans lesquels :

La figure 1 représente la variation du seuil de déclenchement différentiel en fonction du courant de phase dans un déclencheur selon l'art antérieur.

La figure 2 représente un schéma bloc d'un déclencheur statique dans lequel l'invention peut être mise en oeuvre.

La figure 3 représente un mode de réalisation préférentiel du circuit de détection et de redressement du déclencheur selon la figure 2.

Sur la figure 4 sont illustrées des courbes obtenues expérimentalement, représentant la variation du faux courant homopolaire en fonction du courant de phase pour des disjoncteurs de différents calibres.

Les figures 5 à 8 représentent la variation du seuil de déclenchement différentiel en fonction du courant de phase pour diverses valeurs des coefficients de la fonction polynomiale selon l'invention.

Les figures 9 et 10 représentent les variations du seuil de déclenchement différentiel et du faux courant homopolaire en fonction du courant de phase, dans des modes particuliers de réalisation de l'invention.

La figure 11 illustre schématiquement les relations entre les différents paramètres pris en compte par le déclencheur pour réaliser la fonction de protection différentielle.

La figure 12 représente un mode de réalisation particulier d'un organigramme de la fonction de déclenchement différentiel.

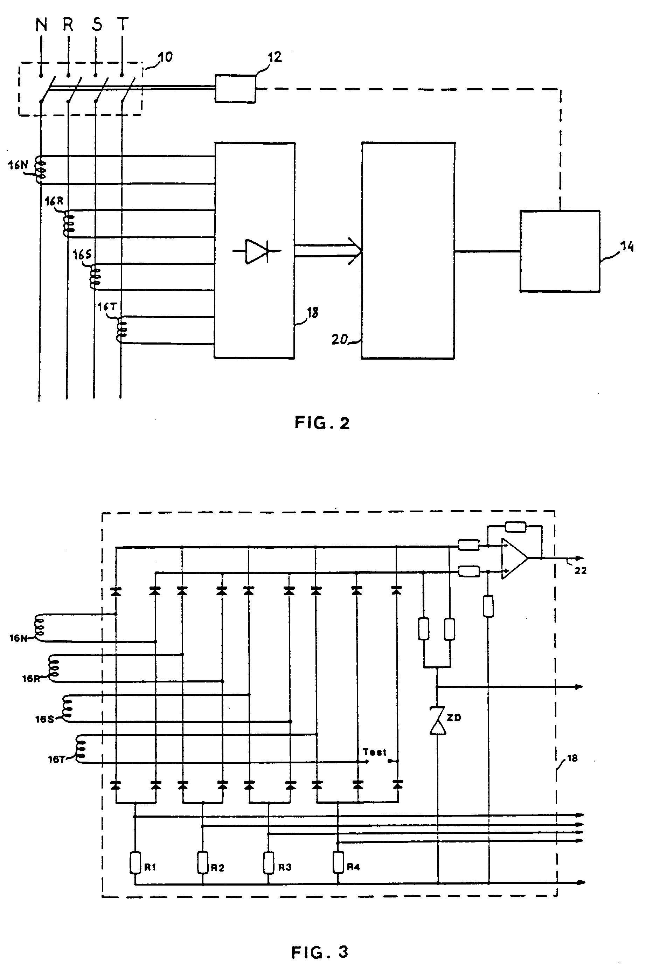

Sur la figure 2, un disjoncteur 10 de protection des lignes R, S, T et N d'un réseau alternatif triphasé avec neutre est actionné par un mécanisme de commande 12 piloté par un relais polarisé 14 de manière à commander le déclenchement du disjoncteur en cas de surcharge, de court-circuit ou de défaut à la terre.

L'intensité du courant circulant dans chaque ligne est détectée par un transformateur de courant 16R, 16S, 16T ou 16N. Les enroulements secondaires des transformateurs de courants sont connectés à un circuit 18 de détection et de redressement qui fournit à l'ensemble électronique de traitement 20 du déclencheur des signaux représentatifs des courants de phase, de neutre, et de défaut à la terre, ainsi qu'une tension d'alimentation dans le cas d'un déclencheur à propre courant. L'ensemble électronique de traitement 20 assure, de manière connue, les fonctions de déclenchement long retard, court retard et instantané de manière à élaborer un ordre de déclenchement du disjoncteur lors d'un dépassement de seuils prédéterminés. L'ordre de déclenchement ainsi produit est appliqué au relais polarisé 14 de manière à actionner le disjoncteur.

De tels ensembles de traitement sont bien connus, qu'ils soient du type analogique comme dans le brevet français 2.530.089 ou du type numérique à microprocesseur comme dans le brevet français 2.578.092.

L'ensemble électronique de traitement 20 assure également la protection différentielle du réseau à partir d'un signal de mesure du courant homopolaire qui lui est fourni par le circuit 18. En l'absence de défaut d'isolement sur le réseau, le courant homopolaire est nul. La présence d'un défaut d'isolement entre un conducteur actif R, S, T, N du réseau et une masse ou la terre provoque la détection par le circuit 18 d'un courant résiduel, ou homopolaire. L'ensemble de traitement 20 utilise ce signal de mesure du courant homopolaire pour assurer, de manière connue, un déclenchement instantané ou temporisé du disjoncteur lorsque ce signal de mesure dépasse des seuils prédéterminés.

La figure 3 représente plus en détail un mode de réalisation particulier du circuit 18 de détection et de redressement du déclencheur statique selon la figure 2. Ce circuit, décrit dans le brevet français 2.612.347 (EP-A-0 283 358), fournit aux bornes de résistances R1 à R4 des signaux indépendants représentatifs des courants de phase parcourant les conducteurs N, R, S et T et sur une ligne 22 un signal représentatif du courant homopolaire. Ce dernier signal est obtenu en faisant la différence entre un signal représentatif de la somme des alternances positives des signaux de sortie de l'ensemble des capteurs de courant 16 et un signal représentatif, en valeur absolue, de la somme des alternances négatives de ces signaux. Le circuit 18 fournit également aux bornes d'une diode Zener ZD une tension destinée à l'alimentation du déclencheur. On se reportera au brevet précité pour une explication plus détaillée du fonctionnement de ce circuit.

Selon l'invention le seuil Is de déclenchement différentiel auquel l'ensemble électronique de traitement 20 du déclencheur compare le signal représentatif du courant homopolaire, par exemple le signal présent sur la ligne 22 du circuit 18 de la figure 3, est une fonction polynomiale, d'ordre supérieur ou égal à deux, du courant de phase Ip le plus élevé circulant dans le réseau.

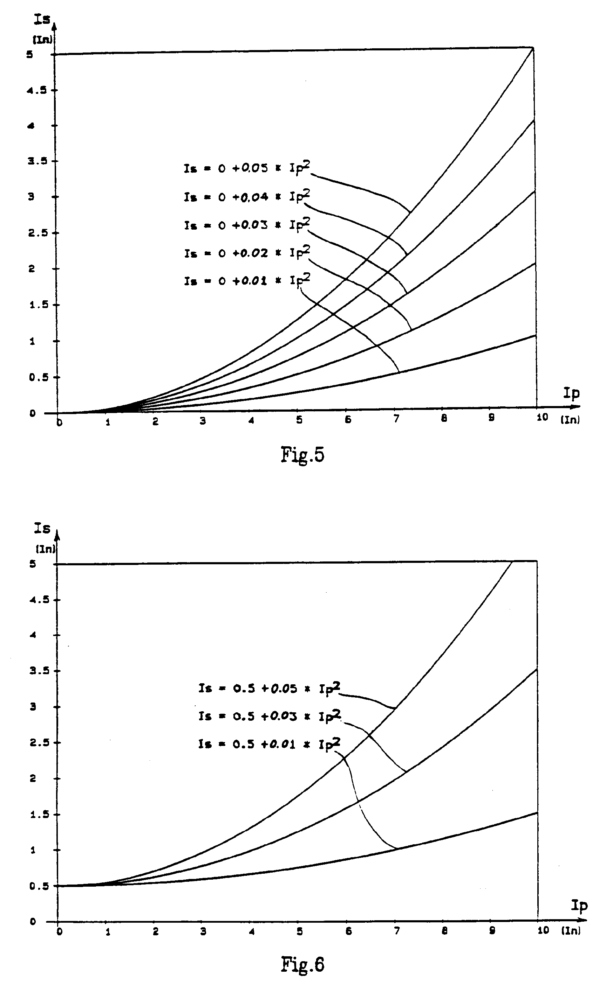

Une telle fonction est du type Is = a + bIp + cIp² + dIp³ ...., dans laquelle a,b,c,d sont des coefficients constants prédéterminés. Diverses fonctions de ce type sont représentées sur les figures 5 à 8.

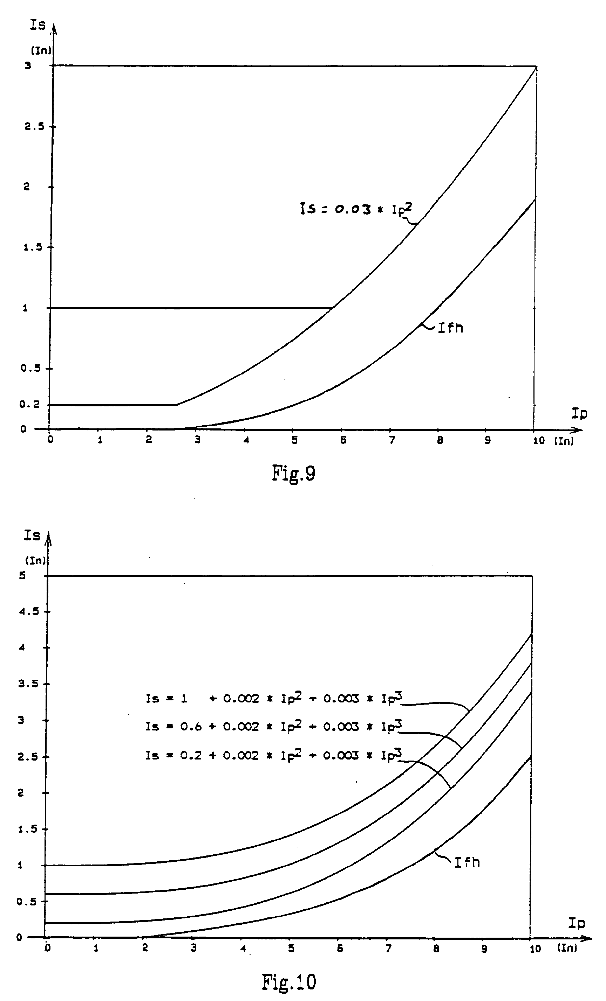

Le choix des coefficients permet d'adapter la courbe de désensibilisation du seuil de déclenchement différentiel à la variation du faux courant homopolaire qui dépend du type de disjoncteur utilisé. Ainsi, pour un type de disjoncteur donné on établit expérimentalement des courbes de variation du faux courant homopolaire en fonction du courant de phase, ces courbes (fig. 4) dépendant notamment du type de transformateurs de courant utilisés, du calibre du disjoncteur et de la configuration des pôles du disjoncteur. Les coefficients de la fonction polynomiale sont alors déterminés de manière à ce que, pour un courant de phase donné, le seuil de déclenchement différentiel Is soit toujours supérieur au faux courant homopolaire Ifh susceptible d'être détecté par le déclencheur (fig. 9 et 10)

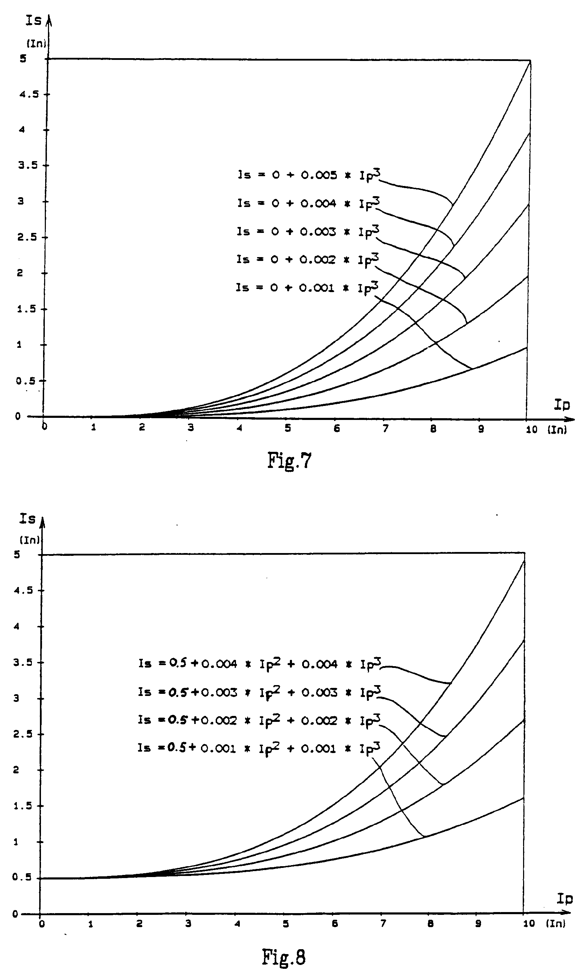

Dans la plupart des cas une fonction de type Is = a + cIp² ou Is = dIp³ (figures 6 et 7) donne des résultats satisfaisants.

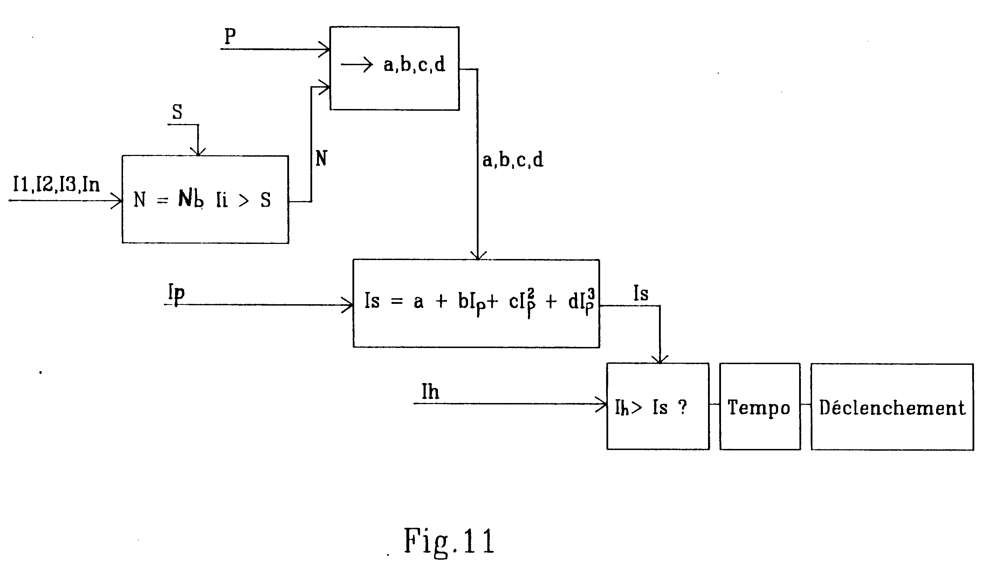

Le traitement du signal homopolaire peut être réalisé aussi bien par un ensemble de traitement de type analogique que par un ensemble de type numérique à microprocesseur. Dans ce dernier cas, les coefficients de la fonction peuvent être modifiés très facilement par programmation. On peut notamment prévoir une modification automatique des coefficients lors de la sélection du calibre du disjoncteur et prévoir également une possibilité de modification par un opérateur en fonction de divers paramètres (calibre, type de disjoncteur, configuration de l'appareil ; entrée des paramètres, figure 11).

Le courant de phase Ip le plus élevé est, dans le mode de réalisation représenté sur les figures 2 et 3 déterminé par l'ensemble de traitement 20, de préférence à microprocesseur. Bien entendu il peut également être déterminé de manière classique, directement par le circuit de détection et de redressement 18 qui fournit alors à l'ensemble 20 un signal représentatif du courant de phase le plus élevé et un signal représentatif du courant homopolaire. Ce dernier peut être obtenu non seulement de la manière représentée sur la figure 3 mais par tout moyen approprié, en particulier par redressement du signal de sortie d'un transformateur sommateur englobant tous les conducteurs du réseau.

La variation du seuil Is étant, selon l'invention, relativement faible pour les faibles valeurs du courant de phase Ip (voir notamment figure 7), la fonction polynomiale peut être utilisée pour déterminer le seuil Is pour toutes les valeurs du courant de phase. Dans le mode de réalisation représenté sur la figure 10, le coefficient constant a, règlable par l'opérateur, permet de faire varier le seuil de déclenchement différentiel minimum. Selon une variante de réalisation, représentée à la figure 9, le seuil peut être fixe, mais réglable (entre 0,2 In et In sur la figure), pour les valeurs inférieures du courant de phase, la fonction polynomiale (Is = Ip² x 0,03 sur la figure) n'étant utilisée que pour les valeurs de Ip supérieures à la valeur correspondant au seuil fixe.

Pour adapter au mieux la courbe de désensibilisation aux besoins réels du disjoncteur on peut également tenir compte, lors de la détermination des coefficients de la fonction polynomiale de désensibilisation du nombre N de phases parcourues par un courant élevé (fig.11). En effet, la valeur des faux courants homopolaires ne dépend pas uniquement de la valeur du courant de phase le plus élevé mais également du nombre de phases parcourues par un courant relativement élevé. Une désensibilisation relativement faible peut ainsi être suffisante lorsque, dans un réseau triphasé, deux des conducteurs de phase sont parcourus par un courant voisin du courant nominal, tandis que le troisième est parcouru par un courant plus élevé. Par contre, si les trois conducteurs de phase sont parcourus par des courants voisins de 5 à 6 In, la désensibilisation, pour un même courant de phase le plus élevé Ip, devra être plus importante. Si l'ensemble de traitement ne tient pas compte de ces différences on choisira bien entendu une courbe de désensibilisation correspondant au cas le plus désavantageux. Il est cependant possible, notamment lors de l'utilisation d'un ensemble de traitement à microprocesseur auquel sont appliqués indépendamment les signaux représentatifs de tous les courants de phase (comme dans le mode de réalisation selon les figures 2 et 3), de prévoir un sous-programme modifiant les coefficients de la fonction polynomiale en fonction du nombre N de courants de phase supérieurs à un certain seuil ( S sur la fig.11) prédéterminé (par exemple 5 In). On peut de cette manière adapter au mieux la désensibilisation du seuil de déclenchement différentiel.

La figure 11 représente les relations entre les différents paramètres pris en compte par le déclencheur dans ce dernier cas. Le nombre N de courants de phase Ii (I1, I2, I3, In) supérieurs à un seuil S est déterminé. Les coefficients a, b, c et d sont fixés en tenant compte de ce nombre N et de paramètres P correspondants notamment au réglage choisi par l'opérateur (coefficient a), au calibre et au type du disjoncteur. Le seuil Is est calculé à partir du courant de phase le plus élevé Ip et le courant homopolaire Ih est comparé au seuil Is calculé, conduisant, après temporisation, au déclenchement du disjoncteur si le seuil est dépassé.

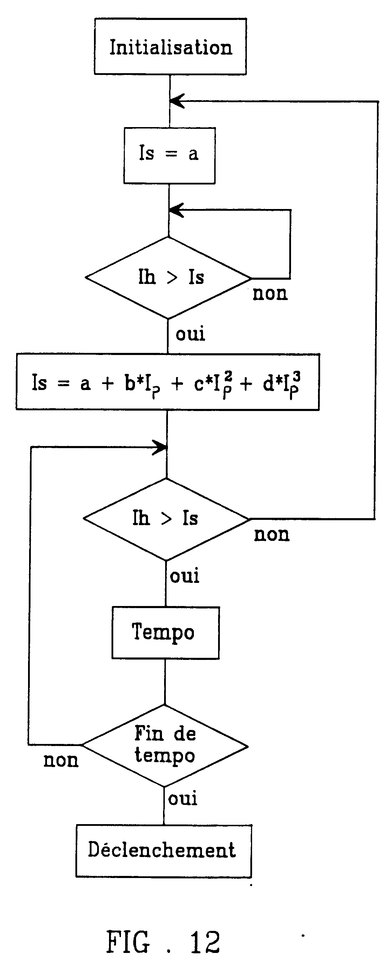

L'organigramme de la figure 12 illustre un mode de réalisation particulier de la fonction de déclenchement différentiel selon lequel, après initialisation, le seuil Is est tout d'abord fixé à la valeur du coefficient a, et le courant homopolaire Ih comparé à ce seuil. La fonction polynomiale n'est calculée que dans le cas où le courant homopolaire est supérieur à ce premier seuil. L'organigramme se poursuit alors de façon classique par comparaison du seuil homopolaire au nouveau seuil Is et déclenchement après temporisation si le courant homopolaire se maintient à une valeur supérieure au seuil.

## Revendications

1. Déclencheur statique d'un disjoncteur (10) de protection d'un réseau électrique à courant alternatif constitué par au moins deux conducteurs, déclencheur comportant des moyens (16,18) de détection des courants de phase parcourant les conducteurs du réseau, des moyens (16,18) de détection du courant homopolaire circulant dans le réseau, un ensemble électronique de traitement (20) auquel sont appliqués les signaux de sortie des moyens de détection et assurant une fonction de protection contre les défauts à la terre en engendrant, avec ou sans retard, un ordre de déclenchement du disjoncteur en cas de dépassement d'un seuil de déclenchement différentiel prédéterminé par le courant homopolaire, déclencheur caractérisé en ce que le seuil de déclenchement différentiel Is est une fonction polynomiale, d'ordre supérieur ou égal à deux, du courant de phase le plus élevé Ip circulant dans le réseau, soit une fonction du type Is = a + bIp + cIp² + dIp³ +...., dans laquelle les coefficients a,b,c,d sont des constantes.

2. Déclencheur selon la revendication 1, caractérisé en ce que ladite fonction est du type Is = a + cIp² + dIp³.

3. Déclencheur selon l'une des revendications 1 et 2, caractérisé en ce que les coefficients a,b,c,d sont déterminés en fonction du type de disjoncteur de manière à ce que, pour tout courant de phase Ip prédéterminé, le seuil de déclenchement différentiel Is soit toujours supérieur au faux courant homopolaire (Ifh) susceptible d'être détecté par le déclencheur.

4. Déclencheur selon la revendication 3, caractérisé en ce que le coefficient a est règlable par un opérateur.

5. Déclencheur selon l'une quelconque des revendications 1 à 3, caractérisé en ce que le seuil de déclenchement différentiel Is a une valeur fixe prédéterminée, réglable par un opérateur, lorsque le courant de phase Ip est inférieur à une valeur prédéterminée et est égal à ladite fonction lorsque le courant de phase est supérieur à ladite valeur.

6. Déclencheur selon l'une quelconque des revendications 1 à 5, caractérisé en ce que les coefficients a, b, c, d de la fonction polynomiale sont déterminés en fonction du nombre (N) de courants de phase supérieurs à un seuil (S) prédéterminé.

## Patentansprüche

1. Elektronischer Auslöser eines Leistungsschalters (10) zum Schutz eines aus mindestens zwei Leitern bestehenden Wechselstromnetzes, wobei der Auslöser Mittel (16, 18) zur Erfassung der in den Netzleitern fließenden Phasenströme, Mittel (16, 18) zur Erfassung des im Netz fließenden Fehlerstroms und eine elektronische Signalverarbeitungsschaltung (20) umfaßt, die mit den Ausgangssignalen der Erfassungsschaltungen beaufschlagt wird und durch Erzeugung eines verzögerten oder unverzögerten Befehls zur Auslösung des Leistungsschalters bei Überschreiten eines festgelegten Differenzstrom-Ansprechwerts durch den Fehlerstrom einen Erdschlußschutz gewährleistet, und der Auslöser dadurch gekennzeichnet ist, daß der Differenzstrom-Ansprechwert Is eine Polynomfunktion zweiter oder höherer Ordnung des größten im Netz fließenden Phasenstroms Ip, d.h. eine Funktion der Form Is = a + bIp + cIp² + dIp³ + ... ist, wobei die Koeffizienten a, b, c, d Konstanten sind.

2. Auslöser nach Anspruch 1, dadurch gekennzeichnet, daß die genannte Funktion die Form Is = a + cIp² + dIp³ hat.

3. Auslöser nach einem der Ansprüche 1 und 2, dadurch gekennzeichnet, daß die Koeffizienten a, b, c, d in Abhängigkeit vom Typ des Leistungsschalters bestimmt werden, so daß für jeden festgelegten Phasenstrom Ip der Differenzstrom-Ansprechwert Is immer höher ist als der scheinbare Fehlerstrom(Ifh), der ggf. durch den Auslöser erfaßt wird.

4. Auslöser nach Anspruch 3, dadurch gekennzeichnet, daß der Koeffizient a durch einen Bediener eingestellt werden kann.

5. Auslöser nach einem der Ansprüche 1 bis 3, dadurch gekennzeichnet, daß der Differenzstrom-Ansprechwert Is einen bestimmten, durch den Bediener einstellbaren festen Wert aufweist, wenn der Phasenstrom Ip unter einem festgelegten Wert liegt, und gleich der genannten Funktion ist, wenn der Phasenstrom über dem genannten Wert liegt.

6. Auslöser nach einem der Ansprüche 1 bis 5, dadurch gekennzeichnet, daß die Koeffizienten a, b, c, d der Polynomfunktion in Abhängigkeit von der Anzahl (N) der über einem festgelegten Schwellwert (S) liegenden Phasenströme bestimmt werden.

## Claims

1. A static trip device of a protective circuit breaker (10) of an A.C. electrical power system made up of at least two conductors, a trip device comprising detection means (16, 18) of the phase currents flowing in the power system conductors, detection means (16, 18) of the earth fault current flowing in the power system, an electronic processing unit (20) to which the output signals from the detection means are applied and which performs an earth fault protection function by generating, with or without a time delay, a circuit breaker tripping order in the event of a preset differential tripping threshold being exceeded by the earth fault current, a trip device characterized in that the differential tripping threshold Is is a polynomial function, of an order greater than or equal to two, of the highest phase current Ip flowing in the power system, i.e. a function of the type Is = a + bIp + cIp2 + dIp3..., in which the coefficients a, b, c, d are constants.

2. The trip device according to claim 1, characterized in that said function is of the type Is = a + cIp2 + dIp3.

3. The trip device according to one of claims 1 and 2, characterized in that the coefficients a, b, c, d are determined according to the type of circuit breaker so that, for any predetermined phase current Ip, the differential tripping threshold Is is always higher than the false earth fault current (Ifh) liable to be detected by the trip device.

4. The trip device according to claim 3, characterized in that the coefficient a is adjustable by an operator.

5. The trip device according to anyone of claims 1 to 3, characterized in that the differential tripping threshold Is has a preset fixed value, adjustable by an operator, when the phase current Ip is lower than a preset value and is equal to said function when the phase current is greater than said value.

6. The trip device according to anyone of claims 1 to 5, characterized in that the coefficients a, b, c, d of the polynomial function are determined according to the number (N) of phase currents higher than a preset threshold (S).
